# EUROPÄISCHE PATENTSCHRIFT

(11) **EP 2 022 932 B1**
(45) Veröffentlichungstag und Bekanntmachung des Hinweises auf die Patenterteilung: **30.06.2010**
(21) Anmeldenummer: 08161025.5
(22) Anmeldetag: 23.07.2008
(51) Int. Cl.: E21B 7/20, E21B 7/28, F16L 1/028, F16L 37/084, F16L 37/091, F16L 55/165

(54) **Zugkopf**
Pull head
Tête de traction

(30) Priorität: 10.08.2007 CH 12652007
(43) Veröffentlichungstag der Anmeldung: 11.02.2009
(73) Patentinhaber: vonRoll infratec (investment) ag, 6300 Zug (CH)
(72) Erfinder: Nielsen, Maick, 4524 Günsberg (CH)
(74) Vertreter: OK pat AG

(56) Entgegenhaltungen:
- EP-A- 0 869 308
- WO-A-00/03171
- DE-A1- 19 749 007
- DE-C1- 19 610 239
- US-A1- 2004 218 982

## Beschreibung

Die vorliegende Erfindung betrifft gemäss dem Oberbegriff des unabhängigen Anspruchs 1 einen Zugkopf zum Einziehen von Rohren in einer Zugrichtung beim unterirdischen Verlegen von Rohrleitungen. Dieser Zugkopf umfasst an seinem vorderen Ende eine Haltevorrichtung zum Befestigen eines Zugelements und an seinem hinteren Ende eine Muffe mit einer Anzahl von Halteelementen. Diese Halteelemente sind zum federnden, permanenten Beaufschlagen der äusseren Oberfläche eines in die Muffe eingeschobenen Spitzendes eines einzuziehenden Rohres in einer Richtung ausgebildet, welche zumindest eine Komponente in der Zugrichtung des Zugkopfes aufweist. Dabei sind diese Halteelemente an der Muffe über den Umfang eines einzuschiebenden Spitzendes verteilt.

Beim unterirdischen Verlegen von Rohren ist es bekannt, zunächst eine unterirdische Pilotbohrung herzustellen, um dann das einzuziehende Rohr oder die einzuziehende Leitung in der Richtung der Pilotbohrung oder in der zu dieser entgegen gesetzten Richtung einzuziehen. Leitungsrohre zum Transportieren von Fluiden, wie Flüssigkeiten (z.B. Wasser) oder Gasen (z.B. Kochgas) oder Flüssigkeit/Gas-Gemischen (z.B. in Fernwärmeleitungen) können auch direkt beim Erstellen der ursprünglichen Bohrung oder auf dem Wege eines zerstörenden Ersetzens von Altrohren verlegt werden.

Zum Zweck des unterirdischen Verlegens von Rohren ist auch das Anlegen einer Startgrube und einer Zielgrube an den beiden Enden der zu verlegenden Rohrleitung bekannt. Ein Zugelement in Form eines Bohrkopfs wird bevorzugt am Ende eines Zugseils oder einer Zugstange befestigt um dann durch ein bestehendes Altrohr gezogen zu werden. Am Bohrkopf kann ein Zugkopf zum Einziehen der neuen Rohrleitung befestigt werden; der Bohrkopf kann aber auch gleichzeitig als Zugkopf ausgebildet sein.

Beim Einziehen von Rohren mittels unterirdischem Verlegen hat es sich gezeigt, dass grosse Unterschiede im Leitungsdurchmesser des Altrohrs und insbesondere Betonriegel Hindernisse darstellen, welche das Verlegen behindern und bis zum Zerreissen der zu verlegenden Rohrleitung führen können. Zudem ist es bekannt, einen Zugkopf zu verwenden, der eine rückseitige Muffe zum Einschieben des Spitzendes eines einzuziehenden Rohres umfasst. Dieses Spitzende wird in der Muffe des Zugkopfs entsprechend dem Prinzip einer schubgesicherten Steckmuffenverbindung gehalten, wie diese aus dem Patent EP 1 095 225 B1 bekannt ist. Allerdings hat es sich herausgestellt, dass sich das Spitzende bei abwechselnder seitlicher Belastung während dem Einziehen des Rohres zu tief in die Muffe des Zugkopfs hinein bewegen und so Schaden nehmen kann.

Aufgabe der vorliegenden Erfindung ist es, einen Zugkopf bereitzustellen, welcher einen verbesserten Schutz für die einzuziehende Rohrleitung bietet.

Diese Aufgabe wird gemäss den Merkmalen des unabhängigen Anspruchs 1 gelöst, indem eine Verbesserung des eingangs erwähnten Zugkopfs zum Einziehen von Rohren in einer Zugrichtung beim unterirdischen Verlegen von Rohrleitungen vorgeschlagen wird. Der erfindungsgemässe Zugkopf ist dadurch gekennzeichnet, dass er einen an die Muffe anschliessenden Sicherungsring mit einer Anzahl von Gegenhalteelementen umfasst, wobei diese Gegenhalteelemente zum federnden Beaufschlagen der äusseren Oberfläche des in die Muffe eingeschobenen Spitzendes eines einzuziehenden Rohres in einer Richtung ausgebildet sind, welche zumindest eine Komponente entgegengesetzt der Zugrichtung des Zugkopfes aufweist, und wobei diese Gegenhalteelemente an diesem Sicherungsring über den Umfang des einzuschiebenden Spitzendes verteilt sind.

Weitere bevorzugte und erfindungsgemässe Merkmale ergeben sich aus den abhängigen Ansprüchen.

Vorteile des erfindungsgemässen Zugkopfs umfassen:
- Die aus dem europäischen Patent EP 1 095 225 B1 bekannte Steckmuffenverbindung eignet sich sehr gut zum Verbinden des Zugkopfs mit dem Spitzende der einzuziehenden Rohrleitung, wobei eine Verbesserung dadurch erzielt wird, dass eine zweite, in umgekehrter Richtung wirkende, sonst aber im wesentlichen identische Verbindung zwischen dem Zugkopf und dem Spitzende der einzuziehenden Rohrleitung geschaffen wird, welche verhindert, dass das Spitzende zu tief in die Muffe des Zugkopfs eintauchen und am Muffengrund anstossen kann.
- Dank einer drehbaren Anordnung der Halteelemente und Gegenhalteelemente und deren permanentem Andrücken an das Spitzende des einzuziehenden Rohrs mittels je eines komprimierten elastischen Rings wird ein Vor- und Rückwärtsbewegen des Spitzendes in der Muffe des Zugkopfs zu jedem Zeitpunkt verhindert.
- Für Spitzenden verschiedenen Durchmessers ist derselbe Querschnitt des mit Haltelementen bestückten Halterings verwendbar.
- Ein Auslenken des Spitzendes des einzuziehenden Rohrs in der Muffe des Zugkopfs wird bevorzugt mittels eines zusätzlichen Dichtrings gewährleistet.

Beispielhafte Ausführungsformen des erfindungsgemässen Zugkopfs werden nun an Hand von schematischen und den Umfang der Erfindung nicht einschränkenden Zeichnungen näher erläutert. Dabei zeigen:
- Fig. 1: Einen Längsschnitt durch einen erfindungsgemässen Zugkopf mit einem montierten Sicherungsring;
- Fig. 2: Eine Ausschnittsvergrösserung des Zugkopfs von Fig. 1 mit einem einteiligen Sicherungsring gemäss einer ersten Ausführungsform;
- Fig. 3: Eine Ausschnittsvergrösserung des Zugkopfs von Fig. 1 mit einem zweiteiligen oder dreiteiligen Sicherungsring gemäss einer zweiten oder dritten Ausführungsform;
- Fig. 4: Eine Teilansicht des Zugkopfs von Fig. 3.

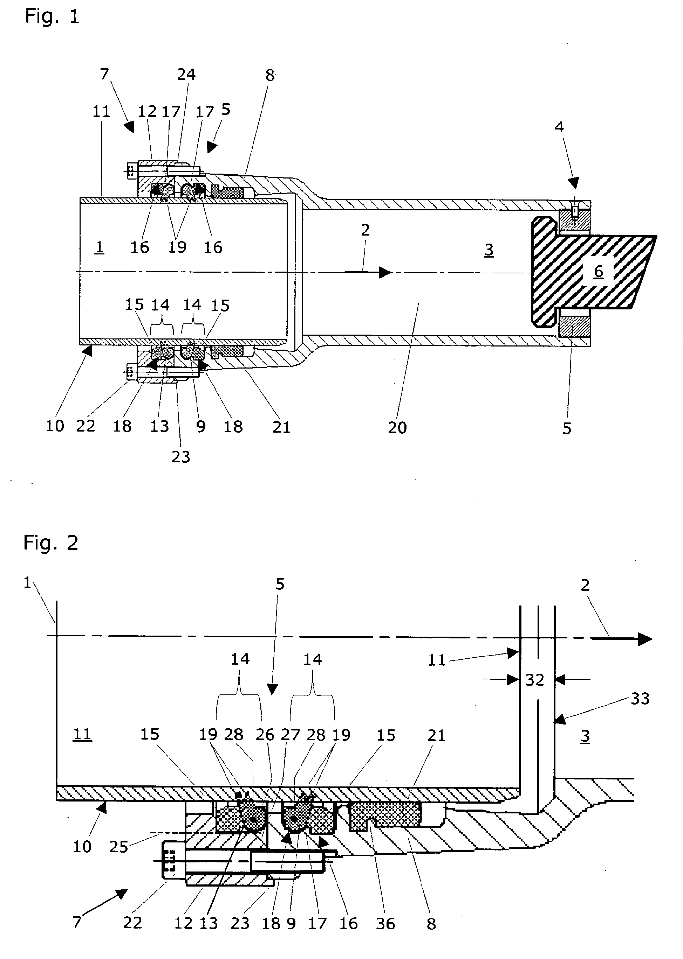

Figur 1 zeigt einen Längsschnitt durch einen erfindungsgemässen Zugkopf mit einem montierten Sicherungsring. Der Zugkopf 3 ist zum Einziehen von Rohren 1 in einer Zugrichtung 2 beim unterirdischen Verlegen von Rohrleitungen konzipiert. Dabei umfasst der Zugkopf 3 an seinem vorderen Ende 4 eine Haltevorrichtung 5 zum Befestigen eines Zugelements 6.

Dieses Zugelement 6 ist hier als Zugstange ausgeführt, welche an ihrem hinteren Ende einen Flansch umfasst, der im Eingriff mit einer, vorzugsweise mit dem Zugkopf verschraubten, ringförmigen Haltevorrichtung 5 im Eingriff steht, wie dies in Fig. 1 gezeigt ist. Dabei dient die ebenfalls gezeigte, radiale Schraube lediglich als Verdrehsicherung für diese Haltevorrichtung 5 und muss deshalb keine Zugkräfte aufnehmen. Zum Einführen dieser Zugstange 6 ist es von Vorteil, wenn der Zugkopf rohrförmig ausgebildet ist und wie gezeigt eine durchgehende Öffnung 20 aufweist. Alternativ zu der hier gezeigten Haltevorrichtung 5 und zum gezeigten Zugelement 6, kann das Zugelement 6 als Drahtseil aus Stahl ausgebildet sein. Es kann z.B. auch vorgesehen sein, dass die Verbindung zwischen Zugelement 6 und Zugkopf 3 mit einem quer zur Zugrichtung 2 stehenden Bolzen oder auf eine andere, dem Fachmann nahe liegende Art hergestellt wird.

Der Zugkopf 3 umfasst an seinem hinteren Ende 7 eine Muffe 8 mit einer Anzahl von Halteelementen 9. Diese Halteelemente 9 sind zum federnden, permanenten Beaufschlagen der äusseren Oberfläche 10 eines in die Muffe 8 eingeschobenen Spitzendes 11 eines einzuziehenden Rohres 1 ausgebildet. Diese Haltelemente 9 sind zudem in einer Richtung ausgerichtet, welche zumindest eine Komponente in der Zugrichtung 2 des Zugkopfes 3 aufweist. Zudem sind diese Halteelemente 9 an der Muffe 8 über den Umfang eines einzuschiebenden Spitzendes 11 verteilt. Je nach der Dimension des einzuziehenden Rohres 1 kann dabei die Anzahl der Halteelemente 9 variieren, damit die sich durch das Einziehen ergebende Kraft auf eine den Rohrdimensionen entsprechende Anzahl von Halteelementen verteilt wird. Wie schon beschrieben ist eine solche schubgesicherte Muffenverbindung aus dem Patent EP 1 095 225 B1 bekannt.

Der erfindungsgemässe Zugkopf 3 umfasst einen an die Muffe 8 anschliessenden Sicherungsring 12 mit einer Anzahl von Gegenhalteelementen 13, welche zum federnden Beaufschlagen der äusseren Oberfläche 10 des in die Muffe 8 eingeschobenen Spitzendes 11 eines einzuziehenden Rohres 1 ausgebildet sind. Diese Gegenhalteelementen 13 beaufschlagen das Spitzende 10 in einer Richtung, welche zumindest eine Komponente umfasst, die entgegengesetzt zu der Zugrichtung 2 des Zugkopfes 1 ausgerichtet ist.

Entsprechend den Halteelementen 9 sind auch diese Gegenhalteelemente 13 an diesem Sicherungsring 12 über den Umfang des einzuschiebenden Spitzendes 11 verteilt, wobei eine Anzahl von zwölf Halteelementen 9 und zwölf Gegenhalteelementen 13 bei einem Rohrdurchmesser von 80-150 mm bevorzugt wird. Je nach den örtlichen Gegebenheiten, den zu erwartenden Kräften, der verwendeten Rohrmaterialien und der verwendeten Rohrdurchmesser können auch mehr oder weniger Halteelemente 9 und Gegenhalteelemente 13 zum sicheren Halten des einzuziehenden Rohrs 1 in der Muffe 8 des Zugkopfs 3 ausgewählt werden. Bevorzugt werden bei Rohrdurchmessern von 80-800 mm 10-80 Halteelemente 9 und 10-80 Gegenhalteelemente 13 zum sicheren Halten des einzuziehenden Rohrs 1 eingesetzt.

Es wird bevorzugt, dass die Halteelemente 9 drehbar in der Muffe 8 und die Gegenhalteelemente 13 drehbar im Sicherungsring 12 angeordnet und in je einen Haltering 14 integriert sind. Dabei umfasst jeder Haltering 14 vorzugsweise einen elastisch komprimierbaren Ring 15, der auf die Halteelemente 9 oder Gegenhalteelemente 13 eine Drehkraft ausübt, welche die dem Spitzende 11 zugewandte Seite der Halteelemente 9 oder Gegenhalteelemente 13 konstant gegen die äussere Oberfläche 10 des Spitzendes 11 eines einzuziehenden Rohres 1 drückt.

Vorzugweise sind diese elastisch komprimierbaren Ringe 15 und die Halteelemente 9 oder Gegenhalteelemente 13 der Halteringe 14 so ausgelegt und zueinander angeordnet, dass jeder der elastisch komprimierbaren Ringe 15 auf die Halteelemente 9 oder die Gegenhalteelemente 13 eine Drehkraft von jeweils mindestens 250 N, insbesondere jeweils mehr als 400 N, ausübt. Zudem weist die dem Spitzende 11 eines einzuziehenden Rohres 1 zugewandte Seite der Halteelemente 9 und der Gegenhalteelemente 13 jeweils ein Festkrallen an der äusseren Oberfläche 10 dieses Spitzendes 11 ermöglichende Mittel auf. Solche Mittel sind bevorzugt ausgewählt aus einer Gruppe, die insbesondere Zähne 19, Vorsprünge, Spitzen oder Rauhigkeiten umfasst.

Das Zusammenwirken der eben beschriebenen Drehkraft und der Mittel zum Festkrallen gewährleistet, dass beim Auftreten von Schubkräften in der Gegenrichtung zu den das Spitzende 11 beaufschlagenden Halteelementen 9 oder Gegenhalteelementen 13 der Eingriff der Halteelemente 9 bzw. der Gegenhalteelemente 13 auf das Spitzende 11 noch verstärkt und damit das Rohr 1 noch sicherer in der Muffe 8 des Zugkopfs 3 gehalten wird.

Jeder dieser Halteringe 14 wird zusammen mit dem elastisch komprimierbaren Ring 15 und den Halteelementen 9 oder den Gegenhalteelementen 13 vorzugsweise in einer Haltering-Innennut 16 in der Muffe 8 oder im Sicherungsring 12 angeordnet. Zudem wird bevorzugt, dass jede der Haltering-Innennuten 16 zwischen dem elastisch komprimierbaren Ring 15 und den Halteelementen 9 oder den Gegenhalteelementen 13 durch einen Ringwulst 17 unterteilt ist. Speziell bevorzugt wird zudem, dass die der Muffe 8 oder dem Sicherungsring 12 zugewandte Seite der Halteelemente 9 oder der Gegenhalteelemente 13 ungefähr halbzylinderförmig ausgebildet ist, wobei jedes diese Halteelemente 9 oder Gegenhalteelemente 13 je eine im wesentlichen senkrecht zur Zugrichtung 2 stehende Drehachse 28 umfasst. Weil jedes dieser Halteelemente 9 oder Gegenhalteelemente 13 vorzugsweise in einem komplementären Teil 18 der Muffe 8 oder des Sicherungsrings 12 gelagert ist, trägt der eben erwähnte Ringwulst zur Ausbildung des komplementären Teils 18 der Muffe 8 oder des Sicherungsrings 12 und damit zur optimalen Positionierung der Drehachse 28 der Halteelemente 9 oder Gegenhalteelemente 13 bei.

Die Halteelemente 9 oder Gegenhalteelemente 13 werden bevorzugt durch Vulkanisieren in den aus Gummi bestehenden bzw. zumindest Gummi umfassenden Haltering 14 eingebettet. Auch der elastisch komprimierbare Ring 15 ist bevorzugt aus Gummi gefertigt. Die Halteelemente 9 und Gegenhalteelemente 13 sind bevorzugt aus Metall, insbesondere rostfreiem Stahl, gefertigt. Alternativ können die Halteelemente 9 oder Gegenhalteelemente 13 auch aus einem nichtleitenden Material, insbesondere formstabilem Kunststoff oder Keramik hergestellt sein. Während beim Herstellen eines Halterings 14 die aus Stahl oder Keramik bestehenden Halteelemente 9 oder Gegenhalteelemente 13 auch mit Gummi oder einem thermoplastischen Elastomer umspritzt werden können, ist ein Mehrkomponenten-Spritzguss zum Herstellen eines Halterings 14 mit aus einem formstabilem Kunststoff bestehenden Halteelementen 9 oder Gegenhalteelementen 13 ebenfalls denkbar.

Bevorzugt wird immer der gleiche Querschnitt für den Haltering 14 gewählt, so dass die Haltering-Innennut 16 sowohl bei den Muffen 8 der Zugköpfe als auch bei den Sicherungsringen 12 immer die gleichen Dimensionen aufweisen kann. Der Haltering 14 und/oder der elastisch komprimierbare Ring 15 kann auch als nicht geschlossener Ring hergestellt sein, welcher an einer Stelle unterbrochen ist. Es wird jedoch bevorzugt, dass der Haltering 14 und der elastisch komprimierbare Ring 15 als ein integrierter, geschlossener und elastisch dehnbarer Ring ausgebildet sind. Ein solcher elastisch dehnbarer Haltering 14 kann beispielsweise sehr einfach auf das Spitzende 11 eines einzuziehenden Rohrs 11 aufgezogen werden. Diese Elastizität des Halterings 14 ist auch deshalb von Vorteil, weil er Produktionstoleranzen in den Rohrdurchmessern, die bis zu 5 mm (bzw. bis zu 15 mm bezogen auf den Rohrumfang) betragen können, ohne zu reissen ausgleichen kann.

Der erfindungsgemässe Zugkopf 3 weist bevorzugt eine Muffe 8 auf, welche einen Dichtring 21 umfasst. Dieser Dichtring 21 beaufschlagt ein in die Muffe 8 eingeschobenes Spitzende 11 eines einzuziehenden Rohrs 1 elastisch und wird vorzugsweise von einem Haltewulst in einer bestimmten Lage in der Muffe 8 gehalten. Dieser elastische Dichtring 21 ermöglicht in geringem Umfang ein Auslenken des Spitzendes 11 des einzuziehenden Rohrs 1 in der Muffe 8 des Zugkopfs 8, wodurch zu grosse einseitige Belastungen des Spitzendes 11 verhindert werden können.

Der Sicherungsring 12 wird vorzugsweise mit Schrauben 22 an der Muffe 8 des Zugkopfs 3 montiert und umfasst einen, zumindest teilweise den Umfang der Muffe 8 umlaufenden, Zentrierring 23 oder mehrere, auf den Umfang der Muffe 8 verteilte, Zentrierringsegmente 24. Dieser Zentrierring 23 bzw. diese Zentrierringsegmente 24 erzwingen ein sauberes konzentrisches Montieren des Sicherungsringes 12 am Zugkopf 3, was eine möglichst gleichmässige Lastverteilung auf das Spitzende 11 des einzuziehenden Rohrs 1 ermöglicht. Die zu erwartenden Kräfte können mehrere kN bis Hunderte von kN betragen, so dass eine möglichst gleichmässige Verteilung auf dem Umfang des Spitzendes 11 anzustreben ist.

Der Sicherungsring 12 kann einteilig, zweiteilig oder auch dreiteilig ausgebildet sein, wie dies aus den Figuren 2 bis 4 ersichtlich ist.

Die Figur 2 zeigt eine Ausschnittsvergrösserung des Zugkopfs von Fig. 1 mit einem einteiligen Sicherungsring 12 gemäss einer ersten Ausführungsform. Dieser Sicherungsring 12 umfasst einen zylindrischen, zur Zugrichtung 2 koaxialen Teil 25 und eine ebenfalls koaxiale, diesen zylindrischen Teil 25 entlang einer Schnittlinie 26 schneidende Fase 27 umfasst. Diese Ausführungsform stellt einen Kompromiss dar, der einerseits einen eine möglichst grosse wirksame Oberfläche aufweisenden, komplementären Teil 18 bereitstellen soll und der andererseits ein einfacheres Einsetzen des Halterings 14 mit den Gegenhalteelementen 13 ermöglichen soll. Insbesondere die Fase 27 ermöglicht ein Überschieben des Sicherungsrings 12 auf einen bereits auf dem Spitzende 11 eines einzuziehenden Rohrs 1 positionierten Haltering 14. Dieses Überschieben wird mit zunehmender Grösse der Fase 27 immer einfacher. Allerdings nimmt mit zunehmender Grösse der Fase 27 die Stütz- und Leitfunktion des komplementären Teils 18 der Haltering-Innennut 16 im Sicherungsring 12 ab. Es hat sich herausgestellt, dass die Montage möglich und auch die Funktion der Gegenhaltelemente 13 gewährleistet ist unter der Bedingungen, dass diese Schnittlinie 26 in der Zugrichtung 2 gleichauf mit oder vor der Drehachse 28 der ungefähr halbzylinderförmig ausgebildeten Gegenhalteelemente 13 angeordnet ist.

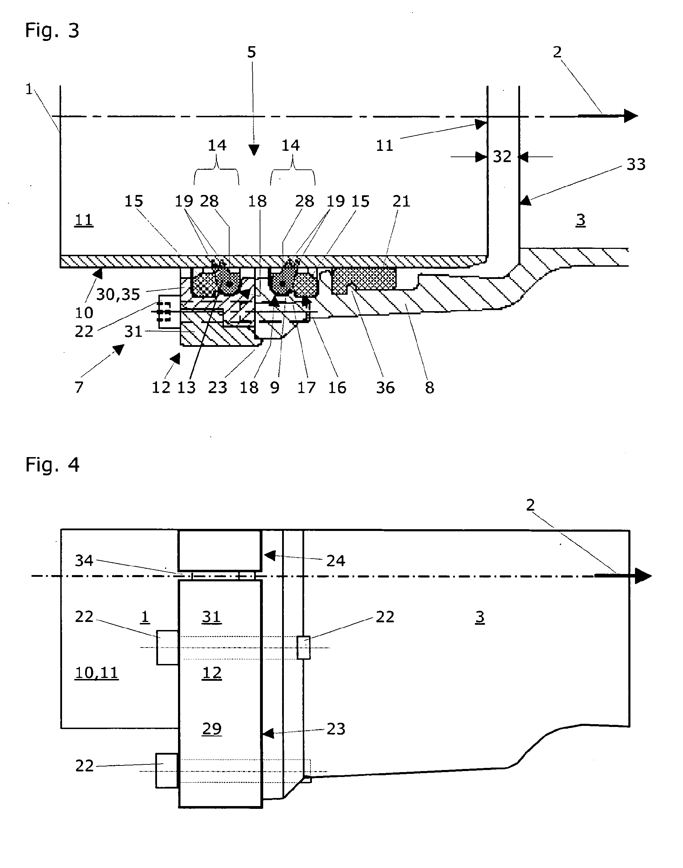

Die Figur 3 zeigt eine Ausschnittsvergrösserung des Zugkopfs von Fig. 1 mit einem zweiteiligen oder dreiteiligen Sicherungsring gemäss einer zweiten oder dritten Ausführungsform.

Gemäss der zweiten Ausführungsform und einer Variante A umfasst der Sicherungsring 12 zwei im wesentlichen das Spitzende 11 eines einzuziehenden Rohres 1 zur Hälfte umfassende Halbringe 29, welche miteinander verriegelbar sind (vgl. auch Fig. 4). Die gegenseitige Verriegelbarkeit der beiden Halbringe 29 kann durch eine Verschraubung oder eine umlaufende, vorzugsweise in einer Vertiefung liegende Bride bewerkstelligt sein (beides nicht gezeigt).

Gemäss der zweiten Ausführungsform und einer Variante B umfasst der Sicherungsring 12 je einen das Spitzende 11 eines einzuziehenden Rohres 1 zumindest im wesentlichen umfassenden inneren Teilring 30 und äusseren Teilring 31. Dabei umfasst der innere Teilring 30 eine Haltering-Innennut 15 und der äussere Teilring 31 einen, zumindest teilweise den Umfang der Muffe 8 umlaufenden Zentrierring 23 oder mehrere, auf den Umfang der Muffe 8 verteilte Zentrierringsegmente 24 (vgl. Fig. 3).

Die Verwendung eines erfindungsgemässen Zugkopfs 3 ist vorzugsweise dadurch gekennzeichnet, dass das Spitzende 11 eines einzuziehenden Rohres 1 in die Muffe 8 des Zugkopfs 3 eingeschoben wird, wobei ein Sicherheitsabstand 32 zwischen dem Muffengrund 33 des Zugkopfs 3 und dem Spitzende 11 des einzuziehenden Rohres 1 eingestellt wird. Dieser Sicherheitsabstand 32 ist in den Figuren 2 und 3 eingetragen und beträgt je nach der Dimension der einzuziehenden Rohre 1 etwa 10 mm bis 50 mm, wobei für die Rohrdurchmesser von 80 bis 150 mm ein Sicherheitsabstand von etwa 20 mm bevorzugt wird.

Bevorzugt ist eine Verwendung eines Zugkopfs 3, die dadurch gekennzeichnet ist, dass vor dem Einschieben eines einzuziehenden Rohres 1 in die Muffe 8 des Zugkopfs 3 ein geschlossener oder an einer Stelle unterbrochener Haltering 14 mit einer Anzahl von Gegenhalteelementen 13 auf dem Spitzende 11 des einzuziehenden Rohres 1 montiert wird, wobei diese Gegenhalteelemente 13 den Halteelementen 9 in der Muffe 8 des Zugkopfs 3 entgegen wirkend ausgerichtet sind. Wie bereits ausgeführt, ist ein solcher Haltering 14 zusammen mit dem elastisch komprimierbaren Ring 15 als ein integrierter, geschlossener und elastisch dehnbarer Ring ausgebildet. Der präzise Ort der Montage des Halterings 14 mit seinen Gegenhalteelementen 13 kann vor dem Einschieben des Spitzendes 11 bereits festgelegt werden, so dass sich nach dem Einschieben in die Muffe 8 des Zugkopfs 3 gerade der angestrebte Sicherheitsabstand ergibt. Für diese spezielle Anwendung ist es von Vorteil, wenn bereits vor dem gezielten Montieren des Halterings 14 ein leerer Sicherungsring 12 auf das Spitzende 11 des einzuziehenden Rohres 1 aufgezogen wird. Dabei wird die Fase 27 im Sicherungsring 12 gegen die Muffe 8 des Zugkopfs 3 und den anschliessend aufzusetzenden Haltering 14 ausgerichtet. Es kann dazu ein geschlossener Sicherungsring 12 oder ein Sicherungsring 12 mit einer Trennfuge 34 verwendet werden (vgl. Fig. 4, die eine Teilansicht des Zugkopfs mit verschraubtem Sicherheitsring zeigt).

Alternativ wird eine Verwendung bevorzugt, bei der nach dem Montieren des Halterings 14 zwei leere Halbringe 29 auf den Haltering 14 gesetzt und miteinander verriegelt werden, wobei der Zentrierring 23 oder die Zentrierringsegmente 24 der Halbringe 29 gegen die Muffe 8 des Zugkopfs 3 gerichtet werden (vgl. ebenfalls Fig. 4, die praktisch das Gleiche darstellt).

Eine andere alternative Verwendung des erfindungsgemässen Zugkopfs 3 umfasst nach dem Montieren des Halterings 14 das Aufsetzen von zwei leere inneren Halbringen 35 auf den Haltering 14, wonach ein äusserer Teilring 31 (der vorzugsweise vorgängig zum Montieren des Halteringes 14 auf das Spitzende 11 aufgezogen wurde) auf diesen zweiteiligen, inneren Teilring 30 gesetzt wird. Auch in diesem Fall werden der Zentrierring 23 bzw. die Zentrierringsegmente 24 des äusseren Teilrings 31 gegen die Muffe 8 des Zugkopfs 3 gerichtet.

Eine weitere alternative Verwendung des erfindungsgemässen Zugkopfs 3 umfasst nach dem Montieren des Halterings 14 das Aufsetzen eines leeren inneren Teilrings 30 auf den Haltering 14 und eines äusseren Teilrings 31 auf den inneren Teilring 30. Vorzugsweise wurden beide Teilringe 30,31 vorgängig zum Montieren des Halteringes 14 auf das Spitzende 11 aufgezogen, wobei der Zentrierring 23 oder die Zentrierringsegmente 24 (je nach dem welche dieser Zentrierhilfen verwendet werden) des äusseren Teilrings 31 gegen die Muffe 8 des Zugkopfs 3 gerichtet werden. Zudem weist zumindest der innere Teilring 30 des Sicherungsrings 12 vorzugsweise eine Trennfuge 34 auf.

Zum Montieren des Sicherungsrings 12 und des von diesem aufzunehmenden Halterings 14 kann es hilfreich sein, ein Spannwerkzeug zu verwenden. Dies ist insbesondere dann von Vorteil, wenn der Sicherungsring 12 zwei Halbringe 29 oder zwei innere Halbringe 35 umfasst. So können diese Halbringe 29,35 exakt auf den positionierten Haltering 14 gelegt und mit dem Spannwerkzeug zusammengedrückt werden. Die zusammengedrückten Halbringe 29 können dann gegeneinander verriegelt und/oder unter Einschieben des Spitzendes 11 direkt mit Schrauben 22 am Hinterende 7 des Zugkopfes 3 befestigt werden. Als Spannwerkzeug eignet sich hier beispielsweise eine um die beiden Halbringe 29 gelegte, verschraubbare Bride (nicht gezeigt), welche bevorzugt in einer umlaufenden Vertiefung (nicht gezeigt) in den beiden Halbringen 29 angeordnet wird. Diese Bride kann auf dem Sicherungsring 12 des Zugkopfs 3 belassen oder vor dem Einziehen der Rohrleitung 1 wieder entfernt werden.

Werden zwei innere Halbringe 35 verwendet, so können diese ebenfalls exakt auf den positionierten Haltering 14 gelegt und mit dem Spannwerkzeug zusammengedrückt werden. Auf die zusammengedrückten, inneren Halbringe 29 wird dann ein äusserer Teilring 31 aufgeschoben. Dann wird das Spannwerkzeug (das hier eine Klemmbride mit Hebelverschluss sein kann) entfernt und der äussre Teilering 31 vollständig auf den inneren Teilring geschoben. Anschliessend wird das Spitzende 11 in die Muffe 8 des Zugkopfs 3 eingeschoben und die beiden Teilringe 30,31 direkt mit Schrauben 22 am Hinterende 7 des Zugkopfes 3 befestigt.

Werden Sicherungsringe 12 oder Teilringe 30,31 mit einer Trennfuge 34 verwendet, so wird das exakte Platzieren dieser Elemente auf dem positionierten Haltering 14 vorzugsweise dadurch vereinfacht, dass ein Spreizwerkzeug verwendet wird, mit welchem der Durchmesser dieser offenen und etwas federnden Ringe 12,30,31 etwas vergrössert werden kann.

Gleiche Teile sind in den Figuren mit den gleichen Bezugszeichen versehen, auch wenn diese nicht in allen Fällen ausdrücklich beschrieben sind.

### Bezugszeichen:

- 1: einzuziehende Rohre
- 2: Zugrichtung
- 3: Zugkopf
- 4: vorderes Ende
- 5: Haltevorrichtung
- 6: Zugelement
- 7: hinteres Ende
- 8: Muffe
- 9: Halteelemente
- 10: äussere Oberfläche
- 11: Spitzende
- 12: Sicherungsring
- 13: Gegenhalteelemente
- 14: Haltering
- 15: elastisch komprimierbarer Ring
- 16: Haltering-Innennut
- 17: Ringwulst
- 18: komplementärer Teil
- 19: Zähne
- 20: durchgehende Öffnung
- 21: Dichtring
- 22: Schrauben
- 23: Zentrierring
- 24: Zentrierringsegmente
- 25: zylindrischer koaxialer Teil
- 26: Schnittlinie
- 27: Fase
- 28: Drehachse
- 29: Halbring
- 30: innerer Teilring
- 31: äusserer Teilring
- 32: Sicherheitsabstand
- 33: Muffengrund
- 34: Trennfuge
- 35: innere Halbringe
- 36: Haltewulst

## Patentansprüche

1. Zugkopf zum Einziehen von Rohren (1) in einer Zugrichtung (2) beim unterirdischen Verlegen von Rohrleitungen, wobei der Zugkopf (3) an seinem vorderen Ende (4) eine Haltevorrichtung (5) zum Befestigen eines Zugelements (6) umfasst, wobei der Zugkopf (3) an seinem hinteren Ende (7) eine Muffe (8) mit einer Anzahl von Halteelementen (9) umfasst, wobei diese Halteelemente (9) zum federnden, permanenten Beaufschlagen der äusseren Oberfläche (10) eines in die Muffe (8) eingeschobenen Spitzendes (11) eines einzuziehenden Rohres (1) in einer Richtung ausgebildet sind, welche zumindest eine Komponente in der Zugrichtung (2) des Zugkopfes (3) aufweist, und wobei diese Halteelemente (9) an der Muffe (8) über den Umfang eines einzuschiebenden Spitzendes (11) verteilt sind, **dadurch gekennzeichnet, dass** der Zugkopf (3) einen an die Muffe (8) anschliessenden Sicherungsring (12) mit einer Anzahl von Gegenhalteelementen (13) umfasst, wobei diese Gegenhalteelemente (13) zum federnden Beaufschlagen der äusseren Oberfläche (10) des in die Muffe (8) eingeschobenen Spitzendes (11) eines einzuziehenden Rohres (1) in einer Richtung ausgebildet sind, welche zumindest eine Komponente entgegengesetzt der Zugrichtung (2) des Zugkopfes (1) aufweist, und wobei diese Gegenhalteelemente (13) an diesem Sicherungsring (12) über den Umfang des einzuschiebenden Spitzendes (11) verteilt sind.

2. Zugkopf nach Anspruch 1, **dadurch gekennzeichnet, dass** die Halteelemente (9) drehbar in der Muffe (8) und die Gegenhalteelemente (13) drehbar im Sicherungsring (12) angeordnet und in je einen Haltering (14) integriert sind, wobei jeder Haltering (14) einen elastisch komprimierbaren Ring (15) umfasst, der auf die Halteelemente (9) oder Gegenhalteelemente (13) eine Drehkraft ausübt, welche die dem Spitzende (11) zugewandte Seite der Halteelemente (9) oder Gegenhalteelemente (13) konstant gegen die äussere Oberfläche (10) des Spitzendes (11) eines einzuziehenden Rohres (1) drückt.

3. Zugkopf nach Anspruch 2, **dadurch gekennzeichnet, dass** die elastisch komprimierbaren Ringe (15) und die Halteelemente (9) oder Gegenhalteelemente (13) so ausgelegt und zueinander angeordnet sind, dass jeder der elastisch komprimierbaren Ringe (15) auf die Halteelemente (9) oder Gegenhalteelemente (13) eine Drehkraft von jeweils mindestens 250 N, insbesondere jeweils mehr als 400 N, ausübt.

4. Zugkopf nach einem der Ansprüche 2 oder 3, **dadurch gekennzeichnet, dass** je ein Haltering (14) mit dem elastisch komprimierbaren Ring (15) und den Halteelementen (9) oder den Gegenhalteelementen (13) in einer Haltering-Innennut (16) in der Muffe (8) oder im Sicherungsring (12) angeordnet ist, wobei jede der Haltering-Innennuten (16) zwischen dem elastisch komprimierbaren Ring (15) und den Halteelementen (9) oder den Gegenhalteelementen (13) durch einen Ringwulst (17) unterteilt sein kann.

5. Zugkopf nach einem der vorhergehenden Ansprüche, **dadurch gekennzeichnet, dass** die der Muffe (8) oder dem Sicherungsring (12) zugewandte Seite der Halteelemente (9) oder der Gegenhalteelemente (13) ungefähr halbzylinderförmig ausgebildet ist, wobei jedes diese Halteelemente (9) oder Gegenhalteelemente (13) je eine im wesentlichen senkrecht zur Zugrichtung (2) stehende Drehachse (28) umfasst und vorzugsweise in einem komplementären Teil (18) der Muffe (8) oder des Sicherungsrings (12) gelagert ist.

6. Zugkopf nach einem der Ansprüche 2 bis 5, **dadurch gekennzeichnet, dass** der Haltering (14) und der elastisch komprimierbare Ring (15) aus Gummi und/oder die Halteelemente (9) oder Gegenhalteelemente (13) aus Metall, insbesondere rostfreiem Stahl, sind.

7. Zugkopf nach einem der Ansprüche 2 bis 6, **dadurch gekennzeichnet, dass** der Haltering (14) und/oder der elastisch komprimierbare Ring (15) kein geschlossener Ring ist, sondern an einer Stelle unterbrochen ist.

8. Zugkopf nach einem der Ansprüche 2 bis 6, **dadurch gekennzeichnet, dass** der Haltering (14) und der elastisch komprimierbare Ring (15) als ein integrierter, geschlossener und elastisch dehnbarer Ring ausgebildet sind.

9. Zugkopf einem der vorhergehenden Ansprüche, **dadurch gekennzeichnet, dass** die dem Spitzende (11) eines einzuziehenden Rohres (1) zugewandte Seite der Halteelemente (9) und der Gegenhalteelemente (13) jeweils ein Festkrallen an der äusseren Oberfläche (10) des Spitzendes (11) ermöglichende Mittel, insbesondere Zähne (19), Vorsprünge, Spitzen oder Rauhigkeiten aufweist.

10. Zugkopf nach einem der Ansprüche 1 bis 5 oder 7 bis 9, **dadurch gekennzeichnet, dass** die Halteelemente (9) oder Gegenhalteelemente (13) aus einem nichtleitenden Material, insbesondere formstabilem Kunststoff oder Keramik, sind.

11. Zugkopf nach einem der vorhergehenden Ansprüche, **dadurch gekennzeichnet, dass** er im wesentlichen rohrförmig gebaut ist und eine vom vorderen Ende (4) zum hinteren Ende (7) durchgehende Öffnung (20) aufweist.

12. Zugkopf nach einem der vorhergehenden Ansprüche, **dadurch gekennzeichnet, dass** diese Muffe (8) einen Dichtring (21) umfasst, welcher ein in die Muffe (8) eingeschobenes Spitzende (11) eines einzuziehenden Rohrs (1) elastisch beaufschlägt.

13. Zugkopf nach einem der vorhergehenden Ansprüche, **dadurch gekennzeichnet, dass** der Sicherungsring (12) mit Schrauben (22) an der Muffe (8) des Zugkopfs (3) montiert ist und einen, zumindest teilweise den Umfang der Muffe (8) umlaufenden, Zentrierring (23) oder mehrere, auf den Umfang der Muffe (8) verteilte, Zentrierringsegmente (24) umfasst.

14. Zugkopf nach einem der vorhergehenden Ansprüche, **dadurch gekennzeichnet, dass** der Sicherungsring (12) einen zylindrischen, zur Zugrichtung (2) koaxialen Teil (25) und eine ebenfalls koaxiale, diesen zylindrischen Teil (25) entlang einer Schnittlinie (26) schneidende Fase (27) umfasst, wobei diese Schnittlinie (26) in der Zugrichtung (2) gleichauf mit oder vor der Drehachse (28) der ungefähr halbzylinderförmig ausgebildeten Gegenhalteelemente (13) angeordnet ist.

15. Zugkopf nach einem der Ansprüche 1 bis 13, **dadurch gekennzeichnet, dass** der Sicherungsring (12) zwei im wesentlichen das Spitzende (11) eines einzuziehenden Rohres (1) zur Hälfte umfassende Halbringe (29) umfasst, welche miteinander verriegelbar sind.

16. Zugkopf nach einem der Ansprüche 1 bis 13, **dadurch gekennzeichnet, dass** der Sicherungsring (12) je einen das Spitzende (11) eines einzuziehenden Rohres (1) zumindest im wesentlichen umfassenden inneren Teilring (30) und äusseren Teilring (31) umfasst, wobei der innere Teilring (30) eine Haltering-Innennut (15) und der äussere Teilring (31) einen, zumindest teilweise den Umfang der Muffe (8) umlaufenden Zentrierring (23) oder mehrere, auf den Umfang der Muffe (8) verteilte Zentrierringsegmente (24) umfasst.

17. Verwendung eines Zugkopfs (3) gemäss einem der vorhergehenden Ansprüche, **dadurch gekennzeichnet, dass** das Spitzende (11) eines einzuziehenden Rohres (1) in die Muffe (8) des Zugkopfs (3) eingeschoben wird, wobei ein Sicherheitsabstand (32) zwischen dem Muffengrund (33) des Zugkopfs (3) und dem Spitzende (11) des einzuziehenden Rohres (1) eingestellt wird.

18. Verwendung eines Zugkopfs (3) gemäss Anspruch 17, **dadurch gekennzeichnet, dass** vor dem Einschieben eines einzuziehenden Rohres (1) in die Muffe (8) des Zugkopfs (3) ein geschlossener oder an einer Stelle unterbrochener Haltering (14) mit einer Anzahl von Gegenhalteelementen (13) auf dem Spitzende (11) des einzuziehenden Rohres (1) montiert wird, wobei diese Gegenhalteelemente (13) den Halteelementen (9) in der Muffe (8) des Zugkopfs (3) entgegen wirkend ausgerichtet werden.

19. Verwendung eines Zugkopfs (3) gemäss Anspruch 18, **dadurch gekennzeichnet, dass** vor dem Montieren des Halterings (14) ein leerer Sicherungsring (12) auf das Spitzende (11) des einzuziehenden Rohres (1) aufgezogen wird, wobei die Fase (27) im Sicherungsring (12) gegen die Muffe (8) des Zugkopfs (3) und den anschliessend aufzusetzenden Haltering (14) ausgerichtet wird, und wobei der Sicherungsring (12) geschlossen ist oder eine Trennfuge (34) aufweist.

20. Verwendung eines Zugkopfs (3) gemäss Anspruch 18, **dadurch gekennzeichnet, dass** nach dem Montieren des Halterings (14) zwei leere Halbringe (29) auf den Haltering (14) gesetzt und miteinander verriegelt werden, wobei der Zentrierring (23) oder die Zentrierringsegmente (24) der Halbringe (29) gegen die Muffe (8) des Zugkopfs (3) gerichtet werden.

21. Verwendung eines Zugkopfs (3) gemäss Anspruch 18, **dadurch gekennzeichnet, dass** nach dem Montieren des Halterings (14) zwei leere innere Halbringe (35) auf den Haltering (14) und ein äusserer Teilring (31) auf diesen zweiteiligen, inneren Teilring (30) gesetzt werden, wobei der Zentrierring (23) oder die Zentrierringsegmente (24) des äusseren Teilrings (31) gegen die Muffe (8) des Zugkopfs (3) gerichtet werden.

22. Verwendung eines Zugkopfs (3) gemäss Anspruch 18, **dadurch gekennzeichnet, dass** nach dem Montieren des Halterings (14) ein leerer innerer Teilring (30) auf den Haltering (14) und ein äusserer Teilring (31) auf den inneren Teilring (30) gesetzt wird, wobei zumindest der innere Teilring (30) des Sicherungsrings (12) bevorzugt eine Trennfuge (34) aufweist und der Zentrierring (23) oder die Zentrierringsegmente (24) des äusseren Teilrings (31) gegen die Muffe (8) des Zugkopfs (3) gerichtet werden.

## Claims

1. A traction head for pulling pipes (1) in a traction direction (2) during the underground laying of pipelines, the traction head (3) having a holding device (5) for fastening a traction element (6) on its front end (4), the traction head (3) comprising a collar (8) having a number of holding elements (9) on its rear end (7), these holding elements (9) being implemented to be permanently applied in a springy manner to the outer surface (10) of a tip end (11), which is inserted into the collar (8), of a pipe (1) to be pulled in in a direction, which has at least one component in the traction direction (2) of the traction head (3), and these holding elements (9) being distributed on the collar (8) around the circumference of a tip end (11) to be inserted, **characterized in that** the traction head (3) comprises a securing ring (12), adjoining the collar (8), having a number of counter holding elements (13), these counter holding elements (13) being implemented to be applied in a springy manner to the outer surface (10) of the tip end (11), which is to be inserted into the collar (8), of a pipe (1) to be pulled in in a direction, which has at least one component opposite to the traction direction (2) of the traction head (1), and these counter holding elements (13) being distributed on this securing ring (12) around the circumference of the tip end (11) to be inserted.

2. Traction head according to claim 1, **characterized in that** the holding elements (9) are situated so they are rotatable in the collar (8) and the counter holding elements (13) are situated so they are rotatable in the securing ring (12) and are each integrated in a holding ring (14), each holding ring (14) comprising an elastically compressible ring (15), which exerts a rotational force on the holding elements (9) or counter holding elements (13), which presses the side of the holding elements (9) or counter holding elements (13) facing toward the tip end (11) constantly against the outer surface (10) of the tip end (11) of a pipe (1) to be pulled in.

3. Traction head according to claim 2, **characterized in that** the elastically compressible rings (15) and the holding elements (9) or counter holding elements (13) are designed and situated in relation to one another so that each of the elastically compressible rings (15) exerts a rotational force of at least 250 N, in particular greater than 400 N each, on the holding elements (9) or counter holding elements (13).

4. Traction head according to one of claims 2 or 3, **characterized in that** each holding ring (14) is situated with the elastically compressible ring (15) and the holding elements (9) or the counter holding elements (13) in a holding ring inner groove (16) in the collar (8) or in the securing ring (12), each of the holding ring inner grooves (16) between the elastically compressible ring (15) and the holding elements (9) or the counter holding elements (13) being able to be divided by a ring bead (17).

5. Traction head according to one of the preceding claims, **characterized in that** the side of the holding elements (9) or the counter holding elements (13) facing toward the collar (8) or the securing ring (12) is implemented as approximately semicylindrical, each of these holding elements (9) or counter holding elements (13) comprising a rotational axis (28) essentially perpendicular to the traction direction (2) and preferably being mounted in a complementary part (18) of the collar (8) or the securing ring (12).

6. Traction head according to one of claims 2 through 5, **characterized in that** the holding ring (14) and the elastically compressible ring (15) are made of rubber and/or the holding elements (9) or counter holding elements (13) are made of metal, in particular rust-free steel.

7. Traction head according to one of claims 2 through 6, **characterized in that** the holding ring (14) and/or the elastically compressible ring (15) is not a closed ring, but rather is interrupted at one point.

8. Traction head according to one of claims 2 through 6, **characterized in that** the holding ring (14) and the elastically compressible ring (15) are implemented as an integrated, closed, and elastically malleable ring.

9. Traction head according to one of the preceding claims, **characterized in that** the side of the holding elements (9) and the counter holding elements (13) facing toward the tip end (11) of a pipe (1) to be pulled in each have means which allow clinging to the outer surface (10) of the tip end (11), in particular teeth (19), projections, tips, or roughened areas.

10. Traction head according to one of claims 1 through 5 or 7 through 9, **characterized in that** the holding elements (9) or counter holding elements (13) are made of a nonconductive material, in particular dimensionally-stable plastic or ceramic.

11. Traction head according to one of the preceding claims, **characterized in that** it is constructed as essentially tubular and has a continuous opening (20) from the front end (4) to the rear end (7).

12. Traction head according to one of the preceding claims, **characterized in that** this collar (8) comprises a sealing ring (21), which is elastically applied to a tip end (11), which is inserted into the collar (8), of a pipe (1) to be pulled in.

13. Traction head according to one of the preceding claims, **characterized in that** the securing ring (12) is installed using screws (22) on the collar (8) of the traction head (3) and has a centering ring (23) running at least partially around the circumference of the collar (8) or multiple centering ring segments (24) distributed on the circumference of the collar (8).

14. Traction head according to one of the preceding claims, **characterized in that** the securing ring (12) comprises a cylindrical part (25), which is coaxial to the traction direction (2), and a chamfer (27), which is also coaxial and intersects this cylindrical part (25) along a section line (26), this section line (26) being situated level with or in front of the rotational axis (28) of the approximately semi-cylindrical counter holding elements (13) in the traction direction (2).

15. Traction head according to one of claims 1 through 13, **characterized in that** the securing ring (12) comprises two half rings (29), which essentially enclose half of the tip end (11) of a pipe (1) to be pulled in, and which are lockable with one another.

16. Traction head according to one of claims 1 through 13, **characterized in that** the securing ring (12) comprises one inner partial ring (30) and one outer partial ring (31), which each at least essentially enclose the tip end (11) of a pipe (1) to be pulled in, the inner partial ring (30) comprising a holding ring inner groove (15) and the outer partial ring (31) comprising a centering ring (23), which runs at least partially around the circumference of the collar (8), or multiple centering ring segments (24) distributed on the circumference of the collar (8).

17. Use of a traction head (3) according to one of the preceding claims, **characterized in that** the tip end (11) of a pipe (1) to be pulled in is inserted into the collar (8) of the traction head (3), a security distance (32) being set between the collar base (33) of the traction head (3) and the tip end (11) of the pipe (1) to be pulled in.

18. Use of a traction head (3) according to claim 17, **characterized in that** before the insertion of a pipe (1) to be pulled in into the collar (8) of the traction head (3), a holding ring (14), which is closed or interrupted at one point, having a number of counter holding elements (13) is installed on the tip end (11) of the pipe (1) to be pulled in, these counter holding elements (13) being oriented acting opposite to the holding elements (9) in the collar (8) of the traction head (3).

19. Use of a traction head (3) according to claim 18, **characterized in that** before the installation of the holding ring (14), an empty securing ring (12) is drawn onto the tip end (11) of the pipe (1) to be pulled in, the chamfer (27) in the securing ring (12) being oriented against the collar (8) of the traction head (3) and the holding ring (14) to be put on subsequently, and the securing ring (12) being closed or having a joint (34).

20. Use of a traction head (3) according to claim 18, **characterized in that**, after the installation of the holding ring (14), two empty half rings (29) are placed on the holding ring (14) and locked with one another, the centering ring (23) or the centering ring segments (24) of the half rings (29) being oriented against the collar (8) of the traction head (3).

21. Use of a traction head (3) according to claim 18, **characterized in that**, after the installation of the holding ring (14), two empty inner half rings (35) are placed on the holding ring (14) and an outer partial ring (31) is placed on this two-part, inner partial ring (30), the centering ring (23) or the centering ring segments (24) of the outer partial ring (31) being oriented against the collar (8) of the traction head (3).

22. Use of a traction head (3) according to claim 18, **characterized in that,** after the installation of the holding ring (14), an empty inner partial ring (30) is placed on the holding ring (14) and an outer partial ring (31) is placed on the inner partial ring (30), at least the inner partial ring (30) of the securing ring (12) preferably having a joint (34) and the centering ring (23) or the centering ring segments (24) of the outer partial ring (31) being oriented against the collar (8) of the traction head (3).

## Revendications

1. Tête de traction destinée à insérer des tubes (1) dans un sens de traction (2) lors de la pose souterraine de conduites, dans lequel la tête de traction (3) comporte au niveau de son extrémité avant (4) un dispositif de retenue (5) destiné à fixer un élément de traction (6), dans lequel la tête de traction (3) comporte au niveau de son extrémité arrière (7) un manchon (8) comportant un certain nombre d'éléments de retenue (9), ces éléments de retenue (9) étant conçus pour charger en permanence, par ressort, la surface externe (10) d'une extrémité (11), insérée dans le manchon (8), d'un tube à introduire (1) dans un sens qui présente au moins une composante dans le sens de traction (2) de la tête de traction (3), et ces éléments de retenue (9) étant répartis au niveau du manchon (8) sur la circonférence d'une extrémité à introduire (11), **caractérisée en ce que** la tête de traction (3) comporte une bague de sûreté (12) se raccordant au manchon (8) et comportant un certain nombre de contre-éléments de retenue (13), ces contre-éléments de retenue (13) étant conçus pour charger par ressort la surface externe (10) de l'extrémité (11), insérée dans le manchon (8), d'un tube à introduire (1) dans un sens qui présente au moins une composante à l'opposé du sens de traction (2) de la tête de traction (1), et ces contre-éléments de retenue (13) étant répartis au niveau de cette bague de sûreté (12) sur la périphérie de l'extrémité (11) à insérer.

2. Tête de traction selon la revendication 1, **caractérisée en ce que** les éléments de retenue (9) sont disposés dans le manchon (8) de façon pivotante et **en ce que** les contre-éléments de retenue (13) sont disposés dans la bague de sûreté (12) de façon pivotante et sont intégrés dans respectivement une bague de retenue (14), chaque bague de retenue (14) comportant une bague (15) compressible par élasticité qui exerce sur les éléments de retenue (9) ou les contre-éléments de retenue (13) une force de torsion qui comprime constamment le côté des éléments de retenue (9) ou des contre-éléments de retenue (13) orienté vers l'extrémité (11) contre la surface externe (10) de l'extrémité (11) d'un tube (1) à introduire.

3. Tête de traction selon la revendication 2, **caractérisée en ce que** les bagues compressibles par élasticité (15) et les éléments de retenue (9) ou les contre-éléments de retenue (13) sont conçus et disposés les uns par rapport aux autres de façon telle que chacune des bagues compressibles par élasticité (15) exerce sur les éléments de retenue (9) ou sur les contre-éléments de retenue (13) une force de torsion de respectivement au moins 250 N, en particulier de respectivement plus de 400 N.

4. Tête de traction selon l'une des revendications 2 ou 3, **caractérisée en ce qu'**une bague de retenue (14) respective est disposée avec la bague compressible par élasticité (15) et les éléments de retenue (9) ou les contre-éléments de retenue (13) dans une rainure interne de bague de retenue (16) du manchon ou de la bague de sûreté (12), chacune des rainures internes de bague de retenue (16) pouvant être subdivisée par un bourrelet annulaire (17) entre la bague compressible par élasticité (15) et les éléments de retenue (9) ou les contre-éléments de retenue (13).

5. Tête de traction selon l'une des revendications précédentes, **caractérisée en ce que** le côté des éléments de retenue (9) ou des contre-éléments de retenue (13) orienté vers le manchon (8) ou vers la bague de sûreté (12) est exécuté de façon approximativement semi-cylindrique, chacun de ces éléments de retenue (9) ou de ces contre-éléments de retenue (13) comportant respectivement un axe de rotation (28) essentiellement perpendiculaire au sens de traction (2) et étant de préférence logé dans une partie complémentaire (18) du manchon (8) ou de la bague de sûreté (12).

6. Tête de traction selon l'une des revendications 2 à 5, **caractérisée en ce que** la bague de retenue (14) et la bague compressible par élasticité (15) sont en caoutchouc et/ou **en ce que** les éléments de retenue (9) ou les contre-éléments de retenue (13) sont en métal, en particulier en acier inoxydable.

7. Tête de traction selon l'une des revendications 2 à 6, **caractérisée en ce que** la bague de retenue (14) et/ou la bague compressible par élasticité (15) n'est pas une bague fermée mais est interrompue en un emplacement.

8. Tête de traction selon l'une des revendications 2 à 6, **caractérisée en ce que** la bague de retenue (14) et la bague compressible par élasticité (15) sont exécutées en tant que bague intégrée, fermée et extensible par élasticité.

9. Tête de traction selon l'une des revendications précédentes, **caractérisée en ce que** le côté des éléments de retenue (9) ou des contre-éléments de retenue (13) orienté vers l'extrémité (11) d'un tube à introduire (1) présente respectivement des moyens permettant une butée fixe au niveau de la surface externe (10) de l'extrémité (11), en particulier des dents (19), des saillies, des pointes ou des rugosités.

10. Tête de traction selon l'une des revendications 1 à 5 ou 7 à 9, **caractérisée en ce que** les éléments de retenue (9) ou les contre-éléments de retenue (13) sont formés d'un matériau non conducteur, en particulier de plastique indéformable ou de céramique.

11. Tête de traction selon l'une des revendications précédentes, **caractérisée en ce qu'**elle est fabriquée essentiellement en forme de tube et présente une ouverture continue depuis l'extrémité avant (4) jusqu'à l'extrémité arrière (7).

12. Tête de traction selon l'une des revendications précédentes, **caractérisée en ce que** ce manchon (8) comporte un anneau d'étanchéité (21) qui charge par élasticité une extrémité (11) d'un tube à introduire (1) insérée dans le manchon (8).

13. Tête de traction selon l'une des revendications précédentes, **caractérisée en ce que** la bague de sûreté (12) est montée avec des vis (22) au niveau du manchon (8) de la tête de traction (3) et comporte une bague de centrage (23), entourant au moins partiellement la périphérie du manchon (8), ou plusieurs segments de bague de centrage (24) répartis sur la périphérie du manchon (8).

14. Tête de traction selon l'une des revendications précédentes, **caractérisée en ce que** la bague de sûreté (12) comporte un élément (25) cylindrique, coaxial par rapport au sens de traction (2), et un chanfrein (27) également coaxial coupant cet élément cylindrique (25) le long d'une ligne de coupe (26), cette ligne de coupe (26) étant disposée dans le sens de traction (2) avec ou avant l'axe de rotation (28) des contre-éléments de retenue (13) exécutés approximativement en forme de demi-cylindre.

15. Tête de traction selon l'une des revendications 1 à 13, **caractérisée en ce que** la bague de sûreté (12) comporte deux demi-bagues (29) englobant essentiellement l'extrémité (11) d'un tube (1) à introduire sur la moitié, les demi-bagues pouvant être verrouillées ensemble.

16. Tête de traction selon l'une des revendications 1 à 13, **caractérisée en ce que** la bague de sûreté (12) comporte respectivement une bague partielle interne (30) entourant au moins essentiellement l'extrémité (11) d'un tube à introduire (1) et une bague partielle externe (31), la bague partielle interne (30) comportant une rainure interne de bague de retenue (15) et la bague partielle externe (31) une bague de centrage (23) entourant au moins partiellement la périphérie du manchon (8) ou plusieurs segments de bague de centrage (24) répartis sur la périphérie du manchon (8).

17. Utilisation d'une tête de traction (3) selon l'une des revendications précédentes, **caractérisée en ce que** l'extrémité (11) d'un tube (1) à introduire est insérée dans le manchon (8) de la tête de traction (3), un écart de sécurité (32) étant réglé entre la base du manchon (33) de la tête de traction (3) et l'extrémité (11) du tube (1) à introduire.

18. Utilisation d'une tête de traction (3) selon la revendication 17, **caractérisée en ce qu'**avant l'insertion d'un tube (1) à introduire dans le manchon (8) de la tête de traction (3), on monte une bague de retenue (14) fermée ou interrompue en un emplacement et ayant un certain nombre de contre-éléments de retenue (13) sur l'extrémité (11) du tube à introduire (1), ces contre-éléments de retenue (13) étant orientés pour agir contre les éléments de retenue (9) du manchon (8) de la tête de traction (3).

19. Utilisation d'une tête de traction (3) selon la revendication 18, **caractérisée en ce qu'**avant le montage de la bague de retenue (14), on place une bague de sûreté libre (12) sur l'extrémité (11) du tube à introduire (1), le chanfrein (27) de la bague de sûreté (12) étant orienté contre le manchon (8) de la tête de traction (3) et la bague de retenue (14) à monter ensuite, et la bague de sûreté (12) étant fermée ou présentant un joint de séparation (34).

20. Utilisation d'une tête de traction (3) selon la revendication 18, **caractérisée en ce qu'**après le montage de la bague de retenue (14), on place deux demi-bagues (29) libres sur la bague de retenue (14) et on les verrouille ensemble, la bague de centrage (23) ou les segments de bague de centrage (24) des demi-bagues (29) étant orientés contre le manchon (8) de la tête de traction (3).

21. Utilisation d'une tête de traction (3) selon la revendication 18, **caractérisée en ce qu'**après le montage de la bague de retenue (14), on place deux demi-bagues internes libres (35) sur la bague de retenue (14) et une bague partielle externe (31) sur cette bague interne partielle (30) en deux parties, la bague de centrage (23) ou les segments de bague de centrage (24) de la bague partielle externe (31) étant orientés contre le manchon (8) de la tête de traction (3).

22. Utilisation d'une tête de traction (3) selon la revendication 18, **caractérisée en ce qu'**après le montage de la bague de retenue (14), on place une bague partielle interne libre (30) sur la bague de retenue (14) et une bague partielle externe (31) sur la bague partielle interne (30), au moins la bague partielle interne (30) de la bague de sûreté (12) présentant un joint de séparation (34) et la bague de centrage (23) ou les segments de bague de centrage (24) de la bague partielle externe (31) étant orientés contre le manchon (8) de la tête de traction (3).
